# EUROPEAN PATENT APPLICATION

(11) **EP 1 677 550 A1**
(43) Date of publication of application: **05.07.2006**
(21) Application number: 04792751.2
(22) Date of filing: 21.10.2004
(51) Int. Cl.: H04Q 7/24

(54) **WIRELESS-LINE-SHARED NETWORK SYSTEM, AND MANAGEMENT APPARATUS AND METHOD THEREFOR**

(30) Priority: 21.10.2003 JP 2003360163
(71) Applicant: NEC CORPORATION, Minato-ku, Tokyo 108-8001 (JP)
(72) Inventor: KIKUCHI, Tsuneyuki; c/o NEC Corporation, , Tokyo; 1088001 (JP)
(74) Representative: Vossius & Partner
(86) International application number: PCT/JP2004/015602
(87) International publication number: WO 2005/039211

(57) **Abstract**

A wireless line sharing network system enabling the charge of fees according to the use of a wireless communication network as well as reduction in capital invested by a communication carrier. A user terminal that subscribes to a communication carrier accesses a corresponding communication carrier network at a licensed radio frequency through a wireless base station (BS) and a control station (10). In response to a call connection request, a call acceptance controller (101) accepts the call and reserves bandwidth based on a radio bandwidth allocation pattern defined by contract and current use conditions. A bandwidth determination section (107) determines bandwidth for the call connection request using the call connection request, a call connection acknowledgement and a bandwidth table (106). A rate change controller (103) controls bandwidths for user terminals so that the currently used bandwidth of each communication carrier are kept within a predetermined range. An accounting controller (110) charges each communication carrier according to the radio bandwidth lease agreement.

## Description

### TECHNICAL FIELD

The present invention relates to a mobile communication network system using licensed radio frequencies, and more particularly, to a technique for sharing the system by a plurality of communication carriers.

### BACKGROUND ART

In recent years, there have been increasing demands for high-speed data communication compatible with mobile multimedia services and a system that can be shared by the same type of mobile terminals all over the world. Against such a background, a global standard for mobile communication systems has been defined, and the development of the systems has been promoted. Thus, the IMT-2000 system, such as the WCDMA system, has come to be introduced.

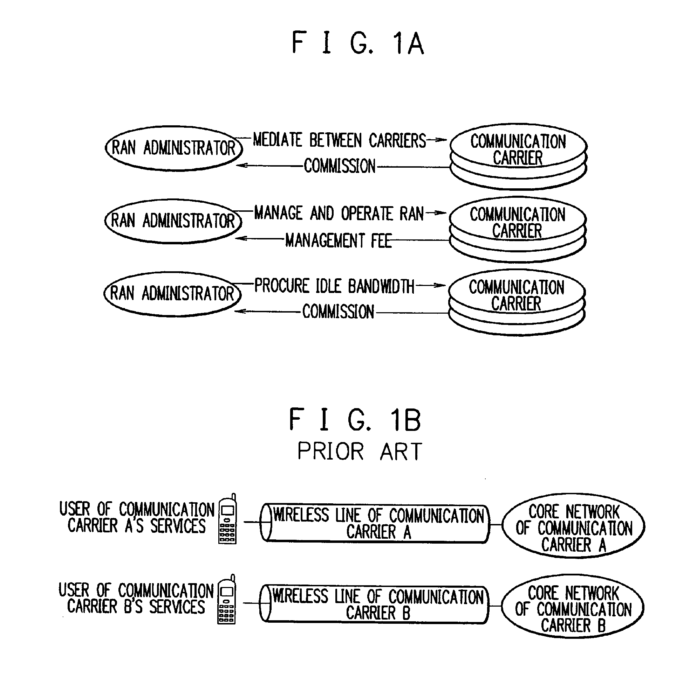

As shown in Fig. 1 (B), a network system typified by WCDMA is a line occupied type system in which each communication carrier or provider obtains licensed frequencies as well as constructing and managing wireless and wired facilities. Generally, such a line occupied type system requires a large initial capital investment, and it is difficult to expand the service area rapidly. The range of the service area is an important factor in the user's selection of a new service and a communication carrier. That is, unless a communication carrier expands the service area to a certain degree, the carrier cannot expect a rapid increase in the number of subscribers. Consequently, the communication carrier needs a longer time to recover the initial investment. Thus, the communication carrier cannot afford the cost for the next capital investment, which causes a delay in the expansion of the business.

In a wired network system, there has been proposed a technique in which communication carriers allow Internet service providers to use their existing wired facilities, and charge facility use fees according to the bandwidth of access lines to the respective providers (ref. Japanese Patent Laid-Open No. 2003-78523). By charging use fees in such a manner, it is possible to alleviate financial burdens on the communication carriers for the cost of capital investment.
Patent Document 1: Japanese Patent Laid-Open No. 2003-78523

### DISCLOSURE OF THE INVENTION

### PROBLEMS THAT THE INVENTION IS TO SOLVE

However, the same business model as applied to a wired network system cannot be directly applied to a wireless network system. This is because the wireless network system is intended to effectively utilize limited radio bandwidth, and bandwidth is reserved according to services in order of receipt of connection requests. As such, a communication carrier may not offer wireless services commensurate with invested capital. Besides, the administrator of a radio access network may not collect appropriate use fees from a communication carrier that has exclusively used wireless facilities.

It is therefore the first object of the present invention to provide a wireless line sharing network system, and an administrative apparatus and a method thereof enabling the charge of fees according to the use of a wireless communication network as well as reduction in capital invested by a communication carrier.

It is the second object of the present invention to provide a wireless line sharing network system, and an administrative apparatus and a method thereof enabling a wireless communication network to be effectively utilized by a plurality of communication carriers.

### MEANS OF SOLVING THE PROBLEMS

In accordance with the first aspect of the present invention, there is provided a wireless line sharing network system in a mobile communication network system capable of a plurality of communications at licensed radio frequencies, comprising: a plurality of user terminals that subscribe to a plurality of communication carriers, respectively; a plurality of wireless base stations capable of communicating with the respective user terminals at the radio frequencies; a control station for controlling the wireless base stations and connecting each of the user terminals to a corresponding communication carrier network; and a call acceptance controller for, when there is a request for call connection to a user terminal, accepting the call as well as reserving bandwidth in response to the call connection request based on at least carrier band information indicating radio bandwidth allocation patterns defined by the respective communication carriers on a contract and carrier use condition information indicating the current use conditions of the bandwidth of the respective communication carriers, and updating the carrier use condition information.

Preferably, the wireless line sharing network system further comprises a bandwidth determination means for determining bandwidth for the call connection request. The bandwidth determination means includes: a bandwidth list generation means for generating a list of at least one selectable bandwidth based on user support band information, licensed band information and carrier support band information; and a determination means for selecting bandwidth from the bandwidth list in descending order, and determining the selected bandwidth as bandwidth for the call connection request when the selected bandwidth is not greater than idle or residual bandwidth obtained from the carrier use condition information.

Preferably, the wireless line sharing network system further comprises a bandwidth change means. Based on at least the carrier band information, the carrier use condition information and user use condition information indicating the current use conditions of call connected user terminals of the plurality of user terminals, the bandwidth change means sequentially changes bandwidths allocated to the call connected user terminals so that the used bandwidth of each of the communication carriers is in a predetermined range. Or, the bandwidth change means sequentially selects call connected user terminals in descending order of bandwidths allocated to the user terminals based on the user use condition information, and changes the bandwidths allocated to the call connected user terminals according to the bandwidth list corresponding to the selected user terminal so that the used bandwidth of each of the communication carriers is in a predetermined range.

Preferably, the wireless line sharing network system further comprises a mediator controller. In the case where bandwidth cannot be reserved for the call connection request or where the use of radio bandwidth exceeds the predetermined percentage of the radio bandwidth defined by contract in a communication carrier, the mediator controller mediates between the communication carrier with insufficient bandwidth and a carrier with excess bandwidth based on the carrier band information and the carrier use condition information so that the carrier with excess bandwidth leases idle bandwidth to the carrier with insufficient bandwidth.

In accordance with the second aspect of the present invention, there is provided an administrative apparatus for sharing a mobile communication network capable of a plurality of communications at licensed radio frequencies among a plurality of communication carriers, the apparatus comprising: a first table for searchably storing carrier band information indicating radio bandwidth allocation patterns defined by the respective communication carriers on a contract; a carrier use condition memory for searchably storing carrier use condition information indicating the current use conditions of the bandwidth of the respective communication carriers; a user use condition memory for searchably storing user use condition information indicating the current use conditions of call connected ones of a plurality of user terminals that subscribe to the communication carriers, respectively; and a controller for controlling the used bandwidth of each of the communication carriers in units of at least bandwidth used by each user terminal based on the carrier band information, the carrier use condition information and the user use condition information, and updating the carrier use condition information and the user use condition information.

The controller includes: a call acceptance controller for, when there is a request for call connection to a user terminal, accepting the call as well as reserving bandwidth in response to the call connection request based on at least the carrier band information indicating radio bandwidth allocation patterns defined by the respective communication carriers on a contract and the carrier use condition information indicating the current use conditions of the bandwidth of the respective communication carriers; and a bandwidth determination means for determining bandwidth for the call connection request based on bandwidth commonly indicated in user support band information of the user terminal contained in the call connection request, licensed band information of a corresponding communication carrier network concerning the call connection request and carrier support band information on predetermined bands supported by the respective communication carriers with respect to each service.

Preferably, the controller further includes a bandwidth change means. Based on at least the carrier band information, the carrier use condition information and the user use condition information indicating the current use conditions of call connected user terminals of the plurality of user terminals, the bandwidth change means sequentially changes bandwidths allocated to the call connected user terminals so that the used bandwidth of each of the communication carriers is in a predetermined range. Or, the bandwidth change means sequentially selects call connected user terminals in descending order of bandwidths allocated to the user terminals based on the user use condition information, and changes the bandwidths allocated to the call connected user terminals according to a bandwidth list corresponding to the selected user terminal so that the used bandwidth of each of the communication carriers is in a predetermined range.

The controller further includes a mediator controller. In the case where bandwidth cannot be reserved for the call connection request or where the use of radio bandwidth exceeds the predetermined percentage of the radio bandwidth defined by contract in a communication carrier, the mediator controller mediates between the communication carrier with insufficient bandwidth and a carrier with excess bandwidth based on the carrier band information and the carrier use condition information so that the carrier with excess bandwidth leases idle bandwidth to the carrier with insufficient bandwidth.

In accordance with the third aspect of the present invention, there is provided an administrative method for sharing a mobile communication network capable of a plurality of communications at licensed radio frequencies among a plurality of communication carriers, the method comprising the steps of: searchably storing carrier band information indicating radio bandwidth allocation patterns defined by the respective communication carriers on a contract; searchably storing carrier use condition information indicating the current use conditions of the bandwidth of the respective communication carriers; searchably storing user use condition information indicating the current use conditions of call connected ones of a plurality of user terminals that subscribe to the communication carriers, respectively; determining, when a user terminal requests call connection, whether or not there is idle bandwidth available for accommodating the call connection request based on the carrier band information and carrier use condition information; forwarding, when there is idle bandwidth available for accommodating the call connection request, the call connection request to a communication carrier network corresponding to the user terminal; determining bandwidth for the call connection request based on a response to the call connection request from the communication carrier network; and updating the carrier use condition information and the user use condition information according to the determined bandwidth.

### EFFECT OF THE INVENTION

In accordance with the present invention, in a mobile communication network, a plurality of user terminals connect to their corresponding communication carrier networks at licensed radio frequencies through wireless base stations, respectively. Based on radio bandwidth allocation patterns and current use conditions of respective communication carriers, a call is accepted and bandwidth is reserved for a call connection request. Besides, the used bandwidth of each of the communication carriers is controlled on the basis of at least bandwidth used by each user terminal, and then carrier use condition information is updated. Thus, appropriate fees can be charged to the respective communication carriers, and the wireless and wired facilities on the mobile communication network can be shared among the plurality of communication carriers.

In addition, the respective communication carriers prepare carrier support band information on predetermined bands supported by them with respect to each service. Bandwidth for a call connection request is determined based on bandwidth commonly indicated in user support band information, licensed band information and the carrier support band information. Alternatively, a selectable bandwidth list is created for a call connection request, and bandwidth selected from the bandwidth list in descending order is determined as bandwidth for the call connection request when the selected bandwidth is not greater than idle bandwidth. Thereby, there is no need to perform inquiry or interrogating communication between the user terminals, the mobile communication network and the communication carrier networks, resulting in reduction in network traffic.

Further, based on at least carrier band information, carrier use condition information and user use condition information, bandwidths allocated to call connected user terminals is sequentially changed so that the used bandwidth of each of the communication carriers is in a predetermined range. Alternatively, call connected user terminals are sequentially selected in descending order of bandwidths allocated to the user terminals based on the user use condition information, and the bandwidths allocated to the call connected user terminals are changed according to the bandwidth list corresponding to the selected user terminal so that the used bandwidth of each of the communication carriers is in a predetermined range. Thus, the mobile communication network can be shared fairly and effectively among the plurality of communication carriers.

Still further, by mediating between a communication carrier with insufficient bandwidth and a carrier with excess bandwidth, the carrier with excess bandwidth can lease idle bandwidth to the carrier with insufficient bandwidth. Consequently, the mobile communication network can be shared flexibly and effectively among the plurality of communication carriers.

### BEST MODE FOR CARRYING OUT THE INVENTION

The term "wireless line sharing network" as used herein is defined as a type of a network in which mobile communication facilities using licensed frequencies are shared or used in common by a plurality of communication carriers. The wireless line sharing network may be hereinafter simply referred to as RAN (Radio Access Network). The wireless line sharing network is a cellular system typified by WCDMA as hardware. However, the wireless line sharing network basically differs in use form from a line occupied type system in which each communication carrier constructs and manages wireless and wired facilities.

Fig. 1 (A) is a schematic diagram showing the basic use form of a wireless line sharing network of the present invention. Fig. 1 (B) is a schematic diagram showing the use form of a conventional line occupied type network. A RAN administrator herein officially obtains radio frequencies, and invests in wireless and wired facilities. The RAN administrator provides contract communication carriers with a variety of services, such as management of the facilities, allocation of radio frequency bands and procurement of idle bandwidth, and charges a commission for the services, thereby recovering the capital investment. On the other hand, communication carriers using the services have advantage that they can substantially reduce initial investment.

As shown in Fig. 1 (A), examples of services provided by the RAN administrator and returns therefor include the following. The RAN administrator mediates between communication carriers to determine shared frequencies, and provides the respective carriers with radio bandwidth according to the frequencies committed thereto and the amount invested in wireless and wired facilities. The RAN administrator receives a commission for the services. The RAN administrator manages and operates the frequencies committed thereto as well as wireless and wired facilities. The RAN administrator receives management fees. Additionally, in the operation of the services, the RAN administrator mediates between communication carriers that borrow and lend bandwidth, and receives a commission for the service.

In this manner, if a plurality of communication carriers share and use frequencies and communication facilities in common, they can alleviate their financial burdens for the cost of capital investment. Further, by the use of leased bandwidths, the frequencies, wireless and wired facilities can be effectively utilized.

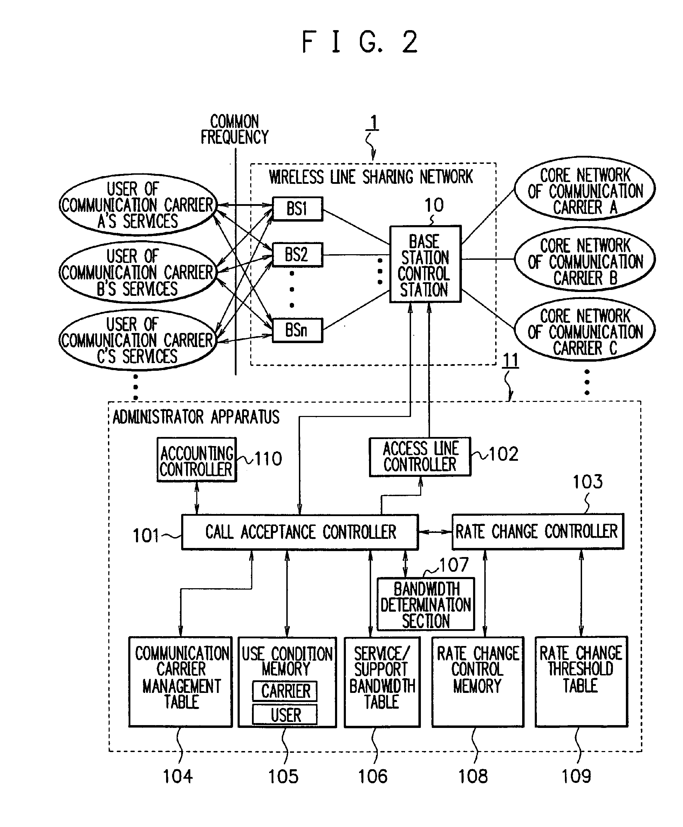

[First Embodiment]
1. System Configuration
Fig. 2 is a block diagram showing the configuration of a wireless line sharing network system according to the first embodiment of the present invention. A wireless line sharing network 1 comprises a plurality of wireless base stations BS1 to BSn, a wireless facility such as a base station control station 10, and wired facilities such as wired cables and routers (not shown). The base station control station 10 controls the wireless base stations BS1 to BSn to forward control signals or data between the base stations BS1 to BSn and the core networks of communication carriers. The base station control station 10 is, as will be described hereinafter, controlled by an administrator apparatus 11.

As is generally known, the wireless base stations BS1 to BSn are geographically distributed. Each wireless base station creates or covers a wireless zone (cell) using prescribed shared frequencies, and enables communication with a plurality of user terminals (hereinafter sometimes simply referred to as UE) located therein. As is described above, the wireless line sharing network 1 is shared by a plurality of communication carriers, and therefore, the plurality of user terminals include terminals corresponding to the communication carriers, respectively. In service areas of the wireless base stations BS1 to BSn, communication is available for any terminal that subscribes to a contract communication carrier.

The administrator apparatus 11 comprises a call acceptance controller 101, an access line controller 102, a rate change controller 103. The call acceptance controller 101 controls call acceptance, which will be described later, using a communication carrier management table 104, a use condition memory 105, a service/ support bandwidth table 106 and a bandwidth determination section 107. The rate change controller 103 controls rate change, which will be described later, using a rate change control memory 108 and a rate change threshold table 109. Besides, the call acceptance controller 101 is provided with an accounting controller 110 for charging each communication carrier based on the lease agreement on a radio frequency band concluded with the carrier. Incidentally, the administrator apparatus 11 may be located outside the wireless line sharing network 1 and connected thereto through a network. Also, the administrator apparatus 11 may be located in the wireless facility of the wireless line sharing network 1.

[Communication Carrier Management Table]
The communication carrier management table 104 stores management information defined according to contract agreements with respective communication carriers. The call acceptance controller 101 refers to the communication carrier management table 104 for controlling call acceptance.

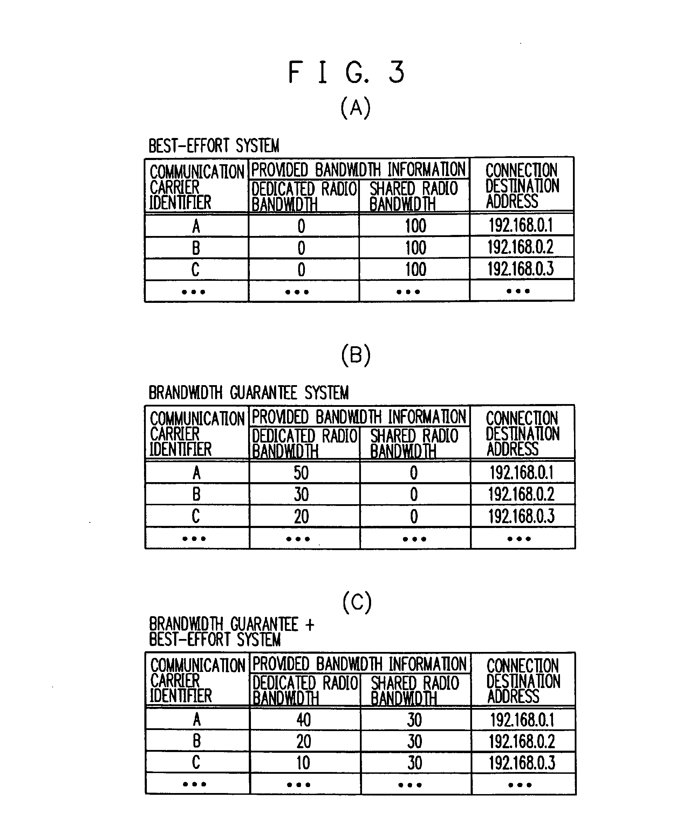

Fig. 3 (A) is a diagram showing an example of the contents of the communication carrier management table 104 in the best-effort system. Fig. 3 (B) is a diagram showing an example of the contents of the communication carrier management table 104 in the bandwidth guarantee system. Fig. 3 (C) is a diagram showing an example of the contents of the communication carrier management table 104 in the "bandwidth guarantee + best-effort" system.

The communication carrier management table 104 is referred to by the call acceptance controller 101. The communication carrier management table 104 searchably stores provided bandwidth information (dedicated radio bandwidth, shared radio bandwidth) and the IP address of the core network of each communication carrier correspondingly to an identifier that specifies the carrier. The provided bandwidth information indicates dedicated radio bandwidth and/ or shared radio bandwidth provided by the RAN administrator to each communication carrier. The provided bandwidth information is set or changed based on a contract between the RAN administrator and each communication carrier.

In the best-effort system as shown in Fig. 3 (A), the radio bandwidth allocation patterns are uniform such that the dedicated radio bandwidth is set to 0% and the shared radio bandwidth is set to 100%. Meanwhile, in the bandwidth guarantee system as shown in Fig. 3 (B), the dedicated radio bandwidth is guaranteed and set with respect to each communication carrier. In Fig. 3 (B), the dedicated radio bandwidth of a communication carrier A is set to 50%, that of a carrier B is set to 30%, and that of a carrier C is set to 20%. Besides, in the "bandwidth guarantee + best-effort" system as shown in Fig. 3 (C), the dedicated radio bandwidth guaranteed to each communication carrier and shared radio bandwidth provided if there is idle bandwidth are set, respectively. In Fig. 3 (C), the dedicated radio bandwidth of the communication carrier A is set to 40%, that of the carrier B is set to 20%, and that of the carrier C is set to 10%, and the shared radio bandwidth of them is set to 30%.

Although not shown in the drawings, in addition to the above systems, there is the priority bandwidth guarantee system in which a specific communication carrier is preferentially guaranteed bandwidth and leases idle bandwidth. For example, if the radio bandwidth of the communication carrier A is set to 100%, that of the carrier B is set to 0%, and that of the carrier C is set to 0%, and there is idle bandwidth, the communication carrier A leases the idle bandwidth to other communication carriers that require it.

[Use Condition Memory]
The use condition memory 105 includes a carrier use condition memory and a user use condition memory. The call acceptance controller 101 refers to the use condition memory 105 to check the current use condition, thereby determining the presence or absence of idle bandwidth.

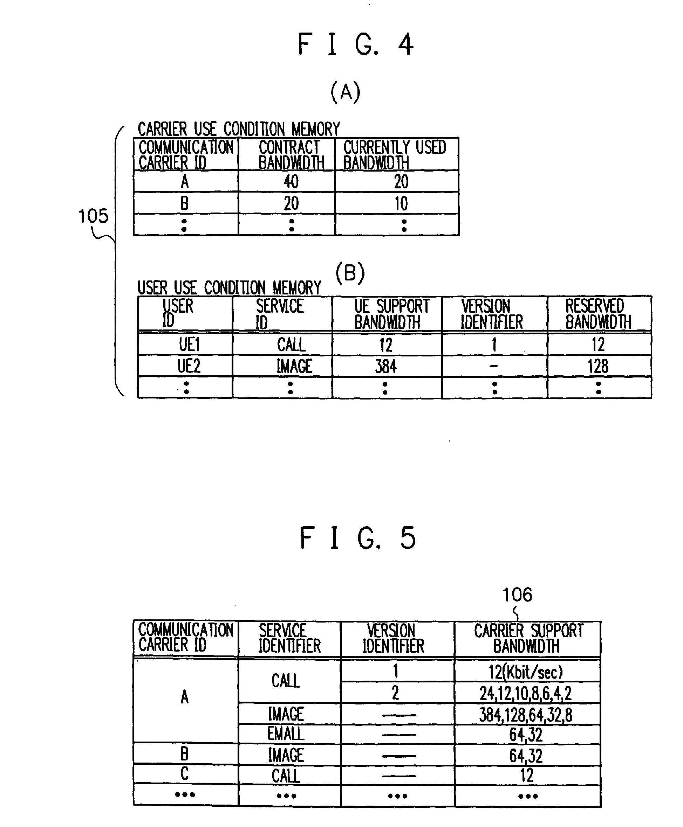

Fig. 4 (A) is a diagram showing an example of the contents of the carrier use condition memory. Fig. 4 (B) is a diagram showing an example of the contents of the user use condition memory. The carrier use condition memory shown in Fig. 4 (A) stores radio bandwidth (bandwidth currently in use) allocated to each communication carrier and the bandwidth of the carrier defined by contract. The carrier use condition memory is updated at the time of call acceptance/ disconnection, or when the lease agreement on a radio frequency band is concluded. For example, on receipt of a call connection request from a user terminal of the communication carrier A, the call acceptance controller 101 adds bandwidth determined to be allocated to the call to the currently used bandwidth of the communication carrier A, as will be described hereinafter. Thereby, the call acceptance controller 101 is capable of determining whether or not each communication carrier has idle bandwidth and whether or not the carrier can lease bandwidth from another carrier based on the bandwidth defined by contract and the currently used bandwidth.

The user use condition memory shown in Fig. 4 (B) stores UE (User Equipment) information with respect to each user identifier that identifies a user terminal (UE) a call connection request from which has been accepted. The UE information includes the service ID of the call, UE support bandwidth, a version identifier, and reserved bandwidth. The UE information is provided by the call connection request.

A call connection request from a user terminal (UE) contains information on the identifier of a communication carrier to which the UE subscribes, a user identifier that uniquely identifies the UE (e.g. subscriber telephone number, etc.), the service identifier of the requested call, the version identifier of the UE, and at least one UE support bandwidth (bandwidth supported by the UE to receive communication service).

For example, on receipt of a call connection request (telephone call) from a user terminal UE 1 of the communication carrier A, the user use condition memory registers therein a service identifier (telephone call), bandwidth supported by the UE1, the version identifier of the UE1 and reserved bandwidth determined in such a manner as will be described later. At the same time, the reserved bandwidth is added to the currently used bandwidth of the communication carrier A in the carrier use condition memory. When the call from the UE1 is disconnected, the UE information corresponding to the UE1 is deleted from the user use condition memory. In addition, the reserved bandwidth is released, and subtracted from the currently used bandwidth of the corresponding communication carrier A in the carrier use condition memory.

[Service/ Support Bandwidth Table]
Fig. 5 is a diagram showing an example of the contents of the service/ support bandwidth table 106. The service/ support bandwidth table 106 stores at least one bandwidth supported by each communication carrier with respect to each service that the carrier provides, and further, with respect to each UE version if any. For example, in the telephone service provided by the communication carrier A, the carrier A can support a bandwidth of 12 Kpbs for a user terminal in version 1.

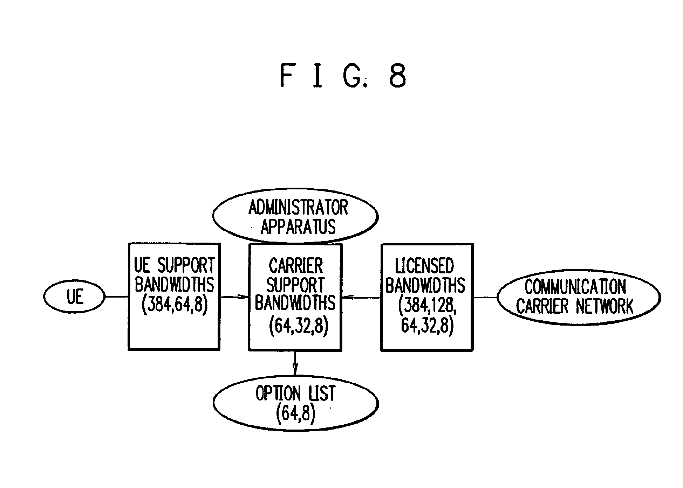

The service/ support bandwidth table 106 is referred to for determining reserved bandwidth when a call connection request from a UE is accepted. As to be more fully described in section "Bandwidth Determination" (Fig. 8), on receipt of information on UE support bandwidth contained in a call connection request from a UE and licensed bandwidth of a communication carrier contained in a call connection acknowledgement (request for the use of service) from the core network of the carrier, the bandwidth determination section 107 refers to the service/ support bandwidth table 106 to create a list of allocatable radio bandwidths. In the case where the request for service is unaccepted due to insufficiency of idle bandwidth, the call acceptance controller 101 determines bandwidth using the list.

2. Operation on Receipt of Call Connection Request
It is assumed that the communication carrier management table 104 stores radio bandwidth allocation patterns in one of the best-effort system, bandwidth guarantee system, and "bandwidth guarantee + best-effort" system shown in Figs. 3 (A) to 3 (C), respectively.

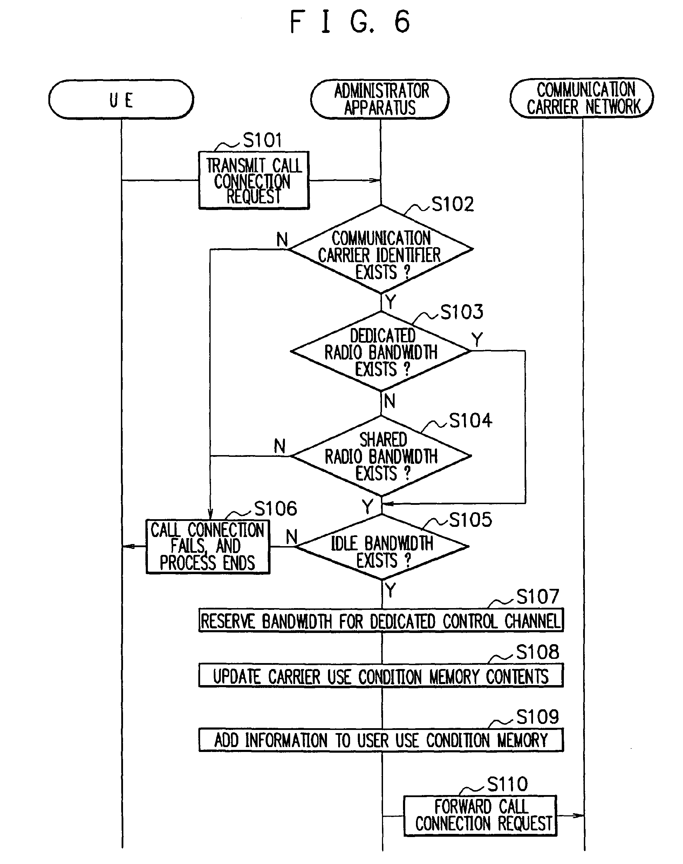

Fig. 6 is a flowchart showing the operation of the administrator apparatus when having received a call connection request from a user terminal UE. When a user terminal UE of a communication carrier transmits a call connection request, the call connection request is forwarded to the administrator apparatus 11 through the base station control station 10 in the wireless line sharing network 1. As is described above, the call connection request contains information on the identifier of the communication carrier to which the UE subscribes, a user identifier that uniquely identifies the UE, the service identifier of the requested call, the version identifier of the UE, and UE support bandwidth.

Upon receipt of a call connection request (step S101), the call acceptance controller 101 refers to the communication carrier management table 104 to determine whether or not a communication carrier identifier contained in the request has been registered (step S102). If the communication carrier identifier does not reside in the table (step S102, N), the call acceptance controller 101 informs the UE of a failure in the call connection attempt, and terminates the process (step S106).

If the communication carrier identifier resides in the table (step S102, Y), the call acceptance controller 101 determines whether or not there is dedicated radio bandwidth to be provided to the communication carrier (step S 103). If such dedicated radio bandwidth exists (step S103, Y), the process proceeds to step S105. If not (step S 103, N), the call acceptance controller 101 determines whether or not there is shared radio bandwidth to be provided to the communication carrier (step S104). If such shared radio bandwidth does not exist (step S104, N), the call acceptance controller 101 informs the UE of a failure in the call connection attempt, and terminates the process (step S106). If any (step S104, Y), the call acceptance controller 101 refers to the carrier use condition memory of the use condition memory 105 to check the bandwidth defined by contract and the currently used bandwidth of the communication carrier. Thereby, the call acceptance controller 101 determines whether or not there is enough idle bandwidth to be allocated for an dedicated control channel (step S105).

If there is no idle bandwidth for the dedicated control channel (step S105, N), the call acceptance controller 101 informs the UE of a failure in the call connection attempt, and terminates the process (step S106). If any (step S105, Y), the call acceptance controller 101 reserves the bandwidth for the dedicated control channel (step S107). Then, the call acceptance controller 101 adds the reserved bandwidth to the currently used bandwidth of the communication carrier in the carrier use condition memory (step S108). After that, the call acceptance controller 101 additionally stores in the user use condition memory UE information including the identifier of the user who has sent the call connection request, service identifier, one or more UE support bandwidths, version identifier of the UE, and the reserved bandwidth (step S109).

Incidentally, in step S107, the bandwidth allocated to the dedicated control channel is fixed. However, the widest bandwidth may be selected as the bandwidth from a list of allocatable radio bandwidths (for the dedicated control channel) created with reference to the service/ support bandwidth table 106 shown in Fig. 5 based on the UE support bandwidth information contained in the call connection request.

Having completed reserving the bandwidth and updating the data, the call acceptance controller 101 refers to the communication carrier management table 104 to read out the connection destination address of the communication carrier. Thereby, the call acceptance controller 101 forwards the call connection request to the core network of the carrier by controlling the access line controller 102 (step S110).

As is described above, the administrator apparatus 11 permits the user terminal UE to use RAN, i.e., performs service authentication of the user, only when the communication carrier management table 104 contains the communication carrier identifier. In this manner, the user authentication can be performed in the administrator apparatus 11. However, the scale of the administrator apparatus 11 is necessitated to be large, and subscriber information has to be distributed to respective administrator apparatuses. To avoid this, the user authentication is preferably performed in the core network of the communication carrier. In this case, a call connection acknowledgement from the core network, which will be presently described, contains an identifier indicating permission/non-permission for the use of the service.

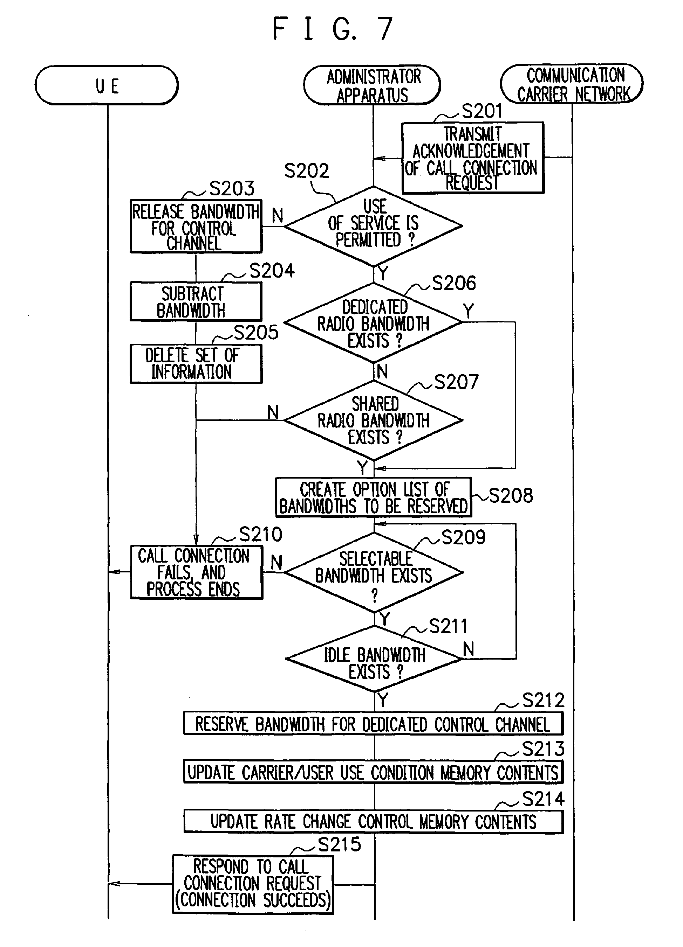

3. Operation on Receipt of Call Connection Acknowledgement
Fig. 7 is a flowchart showing the operation of the administrator apparatus when having received an acknowledgement of the call connection request from a communication carrier network. When a call connection request is transmitted to the core network of a communication carrier and an acknowledgement thereof is transmitted therefrom, the call connection acknowledgement is forwarded to the administrator apparatus 11 through the base station control station 10 in the wireless line sharing network 1. As is described above, it is assumed that the core network performs user authentication and the call connection acknowledgement contains an identifier indicating permission/ non-permission for the use of the service. When the use of the service is permitted, the call connection acknowledgement further contains information on allocatable licensed bandwidth of the communication carrier.

Upon receipt of a call connection acknowledgement (step S201), the call acceptance controller 101 of the administrator apparatus 11 checks a service use permission identifier contained in the acknowledgement (step S202). If the use of the service is not permitted (step S202, N), the call acceptance controller 101 releases the bandwidth reserved in step S107 of Fig. 6 (step S203), and subtracts the released bandwidth from the currently used bandwidth of the communication carrier in the carrier use condition memory (step S204). The call acceptance controller 101 also deletes a set of relevant information from the user use condition memory using a user identifier as a key (step S205). Then, the process proceeds to step S210.

If the use of the service is permitted (step S202, Y), the call acceptance controller 101 refers to the communication carrier management table 104 to determine whether or not there is dedicated radio bandwidth to be provided to the communication carrier (step S206). If such dedicated radio bandwidth exists (step S206, Y), the process proceeds to step S208. If not (step S206, N), the call acceptance controller 101 determines whether or not there is shared radio bandwidth to be provided to the communication carrier (step S207). If such shared radio bandwidth does not exist (step S207, N), the call acceptance controller 101 informs the UE of a failure in the call connection attempt, and terminates the process (step S210). If any (step S207, Y), under the control of the call acceptance controller 101, the bandwidth determination section 107 refers to the service/ support bandwidth table 106 based on the UE support bandwidth information contained in the call connection request and the licensed bandwidth information of the communication carrier contained in the call connection acknowledgement from the core network to create a list of radio bandwidths allocatable for a dedicated data channel (step S208).

The call acceptance controller 101 determines whether or not the created allocatable radio bandwidth list contains allocatable bandwidth (step S209). If allocatable bandwidth does not exist (step S209, N), the call acceptance controller 101 informs the UE of a failure in the call connection attempt, and terminates the process (step S210). If any (step S209, Y), the bandwidth determination section 107 selects the widest of the bandwidths which have not been selected, and determines whether or not there is idle bandwidth equal to or greater than the selected bandwidth (step S211). If there is no such idle bandwidth (step S211, N), the bandwidth determination section 107 returns to step S209 to select bandwidth narrower than the previously selected one. By repeating steps S209 and S211, the bandwidth determination section 107 can select the widest allocatable bandwidth within the current idle or residual bandwidth from the allocatable radio bandwidth list.

The call acceptance controller 101 reserves the bandwidth thus determined for the dedicated data channel (step S212). Then, as is described previously, the call acceptance controller 101 adds the reserved bandwidth to the currently used bandwidth in the carrier use condition memory (Fig. 4 (A)), and updates the reserved bandwidth in the user use condition memory (Fig. 4 (B)) (step S213). Subsequently, information consisting of the reserved bandwidth, the user identifier and a list of selectable bandwidths is added to the top of a group of bandwidths equal to the reserved bandwidth in the rate change control memory 108 (step S214). Thereby, the call acceptance controller 101 informs the UE of success in the call connection attempt (step S215). After that, the user can receive the service using the reserved bandwidth.

[Bandwidth Determination]
Fig. 8 is a schematic diagram for explaining the operation of the bandwidth determination section for determining bandwidth. In aforementioned step S208, the bandwidth determination section 107 refers to the service/ support bandwidth table 106 based on the UE support bandwidth information contained in the call connection request and the licensed bandwidth information of the communication carrier contained in the call connection acknowledgement from the corresponding core network to create an option list of radio bandwidths allocatable for a dedicated data channel.

More specifically, as shown in Fig. 8, it is assumed that a UE itself supports bandwidths of 384, 64 and 8 Kbps, the licensed bandwidths of a communication carrier are 384, 128, 64, 32 and 8 Kbps, and the carrier support bandwidths of the communication carrier set in the service/ support bandwidth table 106 of the administrator apparatus 11 are 64, 32 and 8 Kbps. In this case, the bandwidth determination section 107 creates an option list of radio bandwidths of 64 and 8 Kbps as selectable bandwidths.

Having created a list of selectable bandwidths, the bandwidth determination section 107 first selects the widest bandwidth from the list (step S209 of Fig. 7), and compares the selected bandwidth with current idle bandwidth (step S21 1). If the selected bandwidth is not greater than the idle bandwidth, the bandwidth determination section 107 determines the selected bandwidth as allocatable bandwidth. If the selected bandwidth is greater than the idle bandwidth, the bandwidth determination section 107 selects the next widest bandwidth from the created option list, and compares the selected bandwidth with current idle bandwidth in the same manner as above. The bandwidth determination section 107 sequentially selects bandwidth in descending order from the option list until it selects bandwidth not greater than the idle bandwidth. Thus, the widest allocatable bandwidth is determined within the current idle bandwidth.

As is described above, bandwidths independently supported in the network of a communication carrier and those supported in the wireless line sharing network can be managed separately. In addition, when selected bandwidth does not satisfy conditions, another bandwidth can be selected from the option list. Consequently, it is possible to avoid unnecessary inquiry communication between a UE and the administrator apparatus 11 as well as between the administrator apparatus 11 and a communication carrier network. Thus, network load can be reduced.

4. Rate Change Control
The rate change controller 103 performs rate change control at arbitrary timing using the rate change control memory 108 and the rate change threshold table 109.

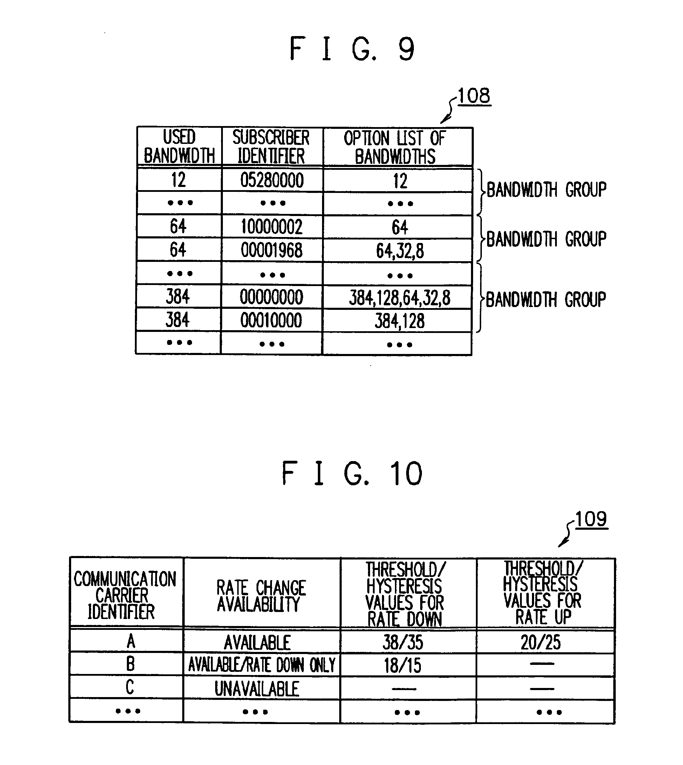

Fig. 9 is a diagram showing an example of the contents of the rate change control memory. The rate change control memory 108 is provided with respect to each communication carrier. In the rate change control memory 108, bandwidth groups are formed in ascending order of bandwidths (used bandwidths) determined by the bandwidth determination section 107 and reserved in each communication carrier. In addition, the rate change control memory 108 stores a list of selectable bandwidths created by the bandwidth determination section 107 and subscriber identifiers. Taking an example of a subscriber identifier "00001968" in a group of bandwidth 64 Kbps, bandwidth can be selected from 64, 32 and 8 Kbps, and a bandwidth of 64 Kbps is currently used.

When the call acceptance controller 101 has accepted call connection and service, the rate change controller 103 adds a relevant subscriber identifier and option list to the top of a group of bandwidths equal to reserved bandwidth allocated to the call. For example, when a call with a subscriber identifier "10000002" is accepted at a bandwidth of 64 Kbps and a selectable bandwidth option list created by the bandwidth determination section 107 contains only 64 Kbps, as exemplified in Fig. 9, data corresponding to the subscriber identifier " 10000002" is added to the top (in Fig. 9, the nearest upper vicinity of the record for a subscriber identifier "00001968") of a group of bandwidth 64 Kbps in the rate change control memory 108.

Fig. 10 is a diagram showing an example of the contents of the rate change threshold table. The rate change threshold table 109 stores, with respect to each communication carrier identifier, information indicating whether or not bandwidth rate change may be made, a threshold value used as a reference value for rate down and hysteresis value thereof, and a threshold value used as a reference value for rate up and hysteresis value thereof.

The threshold value for rate down is set lower than the bandwidth of the communication carrier defined by contract. When the total of used bandwidths increases and exceeds the rate down threshold value, rate change is made to reduce the total used bandwidths. For example, from a UE using wide bandwidth for a long time, rates indicated by the option list is sequentially reduced. On the other hand, the threshold value for rate up is set to an arbitrary low value. When the total of used bandwidths decreases and falls below the rate up threshold value, rate change is made to increase the total used bandwidths. For example, from a new UE using a narrow bandwidth, rates indicated by the option list is sequentially increased. The hysteresis value is provided to change the total used bandwidths at a certain point to thereby suppress the frequent occurrence of rate changes around the threshold.

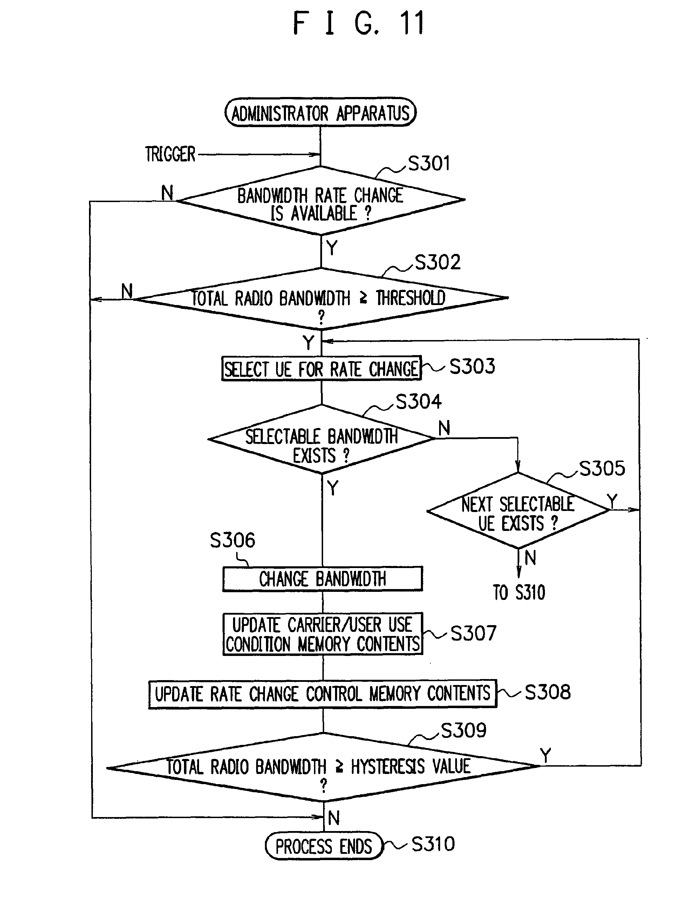

[Rate Down Operation]
Fig. 11 is a flowchart showing the operation of the rate change controller for rate down control. The rate change controller 103 refers to the rate change threshold table 109 in response to an arbitrary trigger with respect to a communication carrier to determine whether or not the bandwidth rate can be changed (step S301). If the rate cannot be changed (step S301, N), the rate change controller 103 terminates the process (step S310). If the rate can be changed (step S301, Y), the rate change controller 103 refers to the carrier use condition memory to determine whether or not currently used bandwidth allocated to the communication carrier is equal to or more than a threshold for rate down (step S302). If the currently used bandwidth is less than the rate down threshold (step S302, N), the rate change controller 103 terminates the process (step S310).

If the currently used bandwidth is not less than the rate down threshold (step S302, Y), as is described previously, the rate change controller 103 selects an UE in a wide bandwidth group from the last, in reverse order, in the rate change control memory 108 (step S303). Then, the rate change controller 103 checks the bandwidth option list for the selected UE (step S304). If there is no option except for the bandwidth currently used (step S304, N), the rate change controller 103 determines whether or not the next UE to be selected is present in the rate change control memory 108 (step S305). If there is no selectable UE (step S305, N), the rate change controller 103 terminates the process (step S310). If there is a selectable UE (step S305, Y), the rate change controller 103 returns to step S303.

If there is an option other than the bandwidth currently used (step S304, Y), the rate change controller 103 changes the bandwidth to the lower one (step S306). Accordingly, the rate change controller 103 updates the currently used bandwidth in the carrier use condition memory and also reserved bandwidth in the user use condition memory (step S307). After that, the rate change controller 103 moves a relevant subscriber identifier and option list to the top of a group of bandwidths equal to newly reserved bandwidth (step S308). The rate change controller 103 determines whether or not the total of currently used bandwidths is equal to or more than a hysteresis value for rate down (step S309). If the total is not less than the hysteresis value (step S309, Y), the rate change controller 103 returns to step S303 for further rate down. If the total is less than the hysteresis value (step S309, N), the rate change controller 103 terminates the process (step S310).

Incidentally, a rate down control flag may be set from when the currently used bandwidth becomes equal to or more than the rate down threshold (step S302, Y) to when the total of used bandwidths becomes less than the hysteresis value for rate down (step S309, N) to prevent the call acceptance controller 101 from accepting a new call connection request.

[Rate Up Operation]
The rate up operation can be performed in the same manner as the rate down operation described above. First, the rate change controller 103 refers to the rate change threshold table 109 in response to an arbitrary trigger with respect to a communication carrier to determine whether or not the bandwidth rate can be changed (step S301). If the rate cannot be changed (step S301, N), the rate change controller 103 terminates the process (step S310). If the rate can be changed (step S301, Y), the rate change controller 103 refers to the carrier use condition memory to determine whether or not the currently used bandwidth allocated to the communication carrier is less than a threshold for rate up (corresponding to step S302). If the currently used bandwidth is not less than the rate up threshold, the rate change controller 103 terminates the process (step S310).

If the currently used bandwidth is less than the rate up threshold (corresponding to step S302, Y), as is described previously, the rate change controller 103 selects an UE in a narrow bandwidth group from the top, in ascending order, in the rate change control memory 108 (step S303). Then, the rate change controller 103 checks the bandwidth option list for the selected UE (step S304). If there is no option except for the bandwidth currently used (step S304, N), the rate change controller 103 determines whether or not the next UE to be selected is present in the rate change control memory 108 (step S305). If there is no selectable UE (step S305, N), the rate change controller 103 terminates the process (step S310). If there is a selectable UE (step S305, Y), the rate change controller 103 returns to step S303.

If there is an option other than the bandwidth currently used (step S304, Y), the rate change controller 103 changes the bandwidth to the greater one (step S306). Accordingly, the rate change controller 103 updates the currently used bandwidth in the carrier use condition memory and also reserved bandwidth in the user use condition memory (step S307). After that, the rate change controller 103 moves a relevant subscriber identifier and option list to the top of a group of bandwidths equal to newly reserved bandwidth (step S308). The rate change controller 103 determines whether or not the total of currently used bandwidths is equal to or less than a hysteresis value for rate up (corresponding to step S309). If the total is not more than the hysteresis value (corresponding to step S309, Y), the rate change controller 103 returns to step S303 for further rate up. If the total exceeds the hysteresis value (corresponding to step S309, N), the rate change controller 103 terminates the process (step S310).

Incidentally, a rate up control flag may be set from when the currently used bandwidth becomes less than the rate up threshold to when the total of used bandwidths exceeds the hysteresis value for rate up to prevent the call acceptance controller 101 from accepting a new call connection request.

5. Operation on Receipt of Call Disconnection information/ Call Disconnection Request
When receiving a call disconnection information after a call is disconnected due to deterioration in radio quality, etc. or a call disconnection request from a UE, the call acceptance controller 101 releases the reserved bandwidth in the user use condition memory with a subscriber identifier and a service identifier contained in the call disconnection request as a key. Thereafter, the call acceptance controller 101 subtracts the released bandwidth from the currently used bandwidth in the carrier use condition memory. The call acceptance controller 101 also deletes a set of relevant information from the user use condition memory and the rate change control memory 108. Further, in the case of having received the call disconnection request, the call acceptance controller 101 informs the UE of the completion of call disconnection.

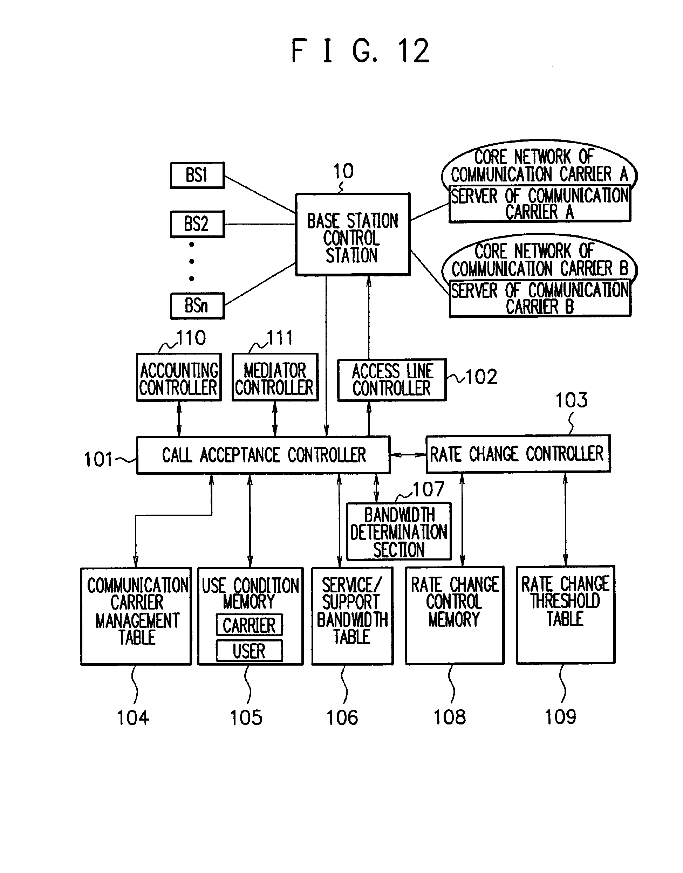

[Second Embodiment]
Fig. 12 is a block diagram showing the configuration of a wireless line sharing network system according to the second embodiment of the present invention. In the wireless line sharing network system of this embodiment, the base station control station 10 is connected to the local server of each communication carrier as well as the core network thereof. In this embodiment, the radio bandwidth allocation patterns in the priority bandwidth guarantee system are set in the communication carrier management table 104, and the administrator apparatus 11 for controlling the base station control station 10 is provided with a mediator controller 111 to mediate between communication carriers that borrow and lend idle bandwidth. Otherwise, the configuration of the system is similar to that of the first embodiment shown in Fig. 2, and like numerals are utilized in designating corresponding portions, a detailed description of which will not be repeated.

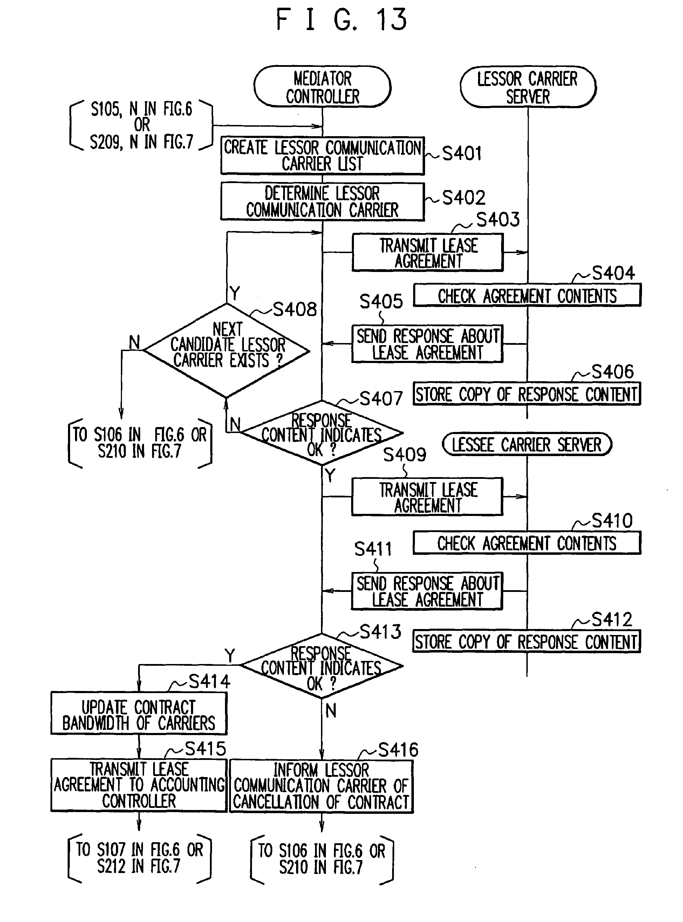

Fig. 13 is a flowchart showing an example of the intermediary operation of the mediator controller in the second embodiment. Incidentally, Fig. 13 shows part of the intermediary operation flow of the mediator controller, the entire operation flow of the administrator apparatus 11 shown in Fig. 7 being omitted.

As shown in Fig. 6, the call acceptance controller 101 of the administrator apparatus 11 determines whether or not there is allocatable bandwidth (step S105 in Fig. 6). Or, as shown in Fig. 7, the call acceptance controller 101 determines whether or not the created allocatable radio bandwidth list contains allocatable bandwidth (step S209 in Fig. 7). If there is no allocatable bandwidth (step S105, N in Fig. 6), or allocatable bandwidth does not exist in the list (step S209, N in Fig. 7), the mediator controller 111 is activated to procure idle bandwidth for the communication carrier.

In Fig. 13, the mediator controller 111 first refers to the communication carrier management table 104 and the carrier use condition memory to create a communication carrier list that shows communication carriers in order from the one having the widest idle bandwidth (step S401). The mediator controller 111 selects as a lender or lessor a communication carrier having the widest idle bandwidth from the communication carrier list (step S402). Then, the mediator controller 111 transmits the lease agreement to the local server of the selected communication carrier (step S403). The lease agreement specifies bandwidth leased to another communication carrier, the use fees thereof and intermediary commissions.

Having received the lease agreement, the local server of the communication carrier checks the contents thereof (step S404). The local server sends back an OK response to the mediator controller 111 if the contents are all right, while it sends an NG response thereto if the contents are wrong (step S405). The local server stores a copy of the response content (step S406).

The mediator controller 111 checks the content of the received response (step S407). If the response content indicates NG (step S407, N), the mediator controller 111 determines whether or not the next candidate lessor carrier exists (step S408). If the next lessor carrier exists, the mediator controller 111 returns to step 403 to transmit the lease agreement to the local server of the communication carrier. If the next lessor carrier does not exist, the process returns to step S 106 in Fig. 6 or step S210 in Fig. 7.

If the response content indicates OK (step S407, Y), the mediator controller 111 transmits the lease agreement to the local server of a lessee (borrower) communication carrier with insufficient bandwidth. The lease agreement specifies bandwidth leased from another communication carrier, the use fees thereof and intermediary commissions. The local server of the lessee communication carrier checks the contents of the lease agreement (step S410). The local server sends back an OK response to the mediator controller 111 if the contents are all right, while it sends an NG response thereto if the contents is wrong (step S411). The local server stores a copy of the response content (step S412). The mediator controller 111 checks the content of the received response (step S413). If the response content indicates OK (step S413, Y), the agreement to lease idle bandwidth is concluded. Thereby, the mediator controller 111 updates the bandwidth defined by contract in the carrier use condition memory (step S414), sends the lease agreement to the accounting controller 110 (step S415), and reserves bandwidth leased from the lessor communication carrier as the one for the dedicated data channel of the lessee communication carrier (step S107 in Fig. 6 or step S212 in Fig. 7). If the response content indicates NG (step S413, N), the mediator controller 111 informs the local server of the lessor communication carrier that the agreement has been cancelled (step S416), and returns to step S106 in Fig. 6 or step S210 in Fig. 7 to inform the UE of a failure in the call connection attempt and the completion of the process.

In the above example, the mediator controller 111 is activated when there is no allocatable bandwidth to perform intermediary control and procure idle bandwidth. However, the mediator controller 111 may be activated in another manner as below.

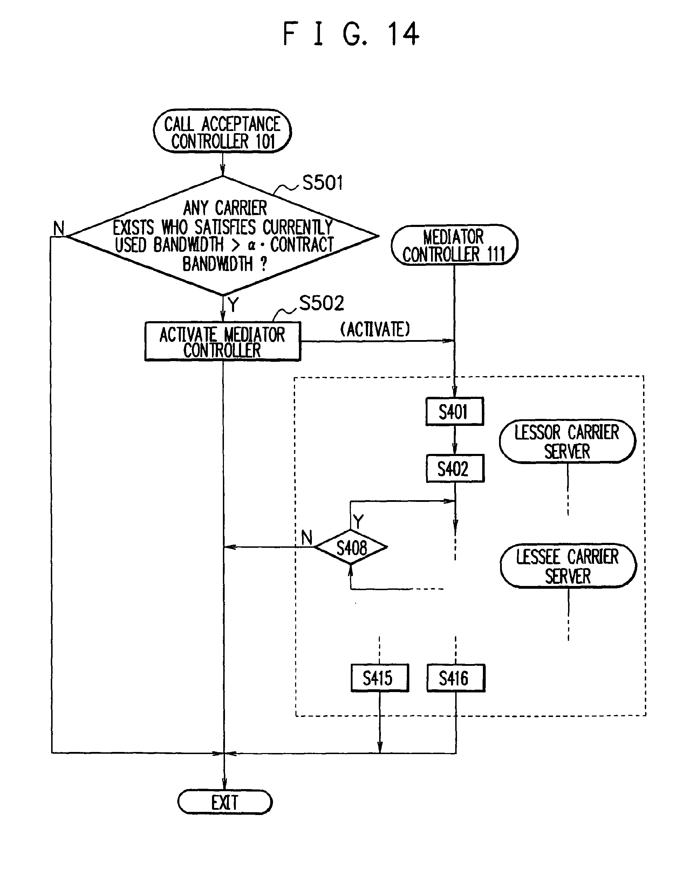

Fig. 14 is a flowchart showing another example of the intermediary operation of the mediator controller in the second embodiment. The call acceptance controller 101 of the administrator apparatus 11 checks whether or not used bandwidth exceeds the prescribed percentage α (0 < α < 1) of the bandwidth of a carrier defined by contract (contract bandwidth) at predetermined time intervals. That is, the call acceptance controller 101 determines whether or not the currently used bandwidth > α × the contract bandwidth (step S501).

If the currently used bandwidth > α × the contract bandwidth (step S501, Y), the call acceptance controller 101 determines that the communication carrier is running short of available bandwidth, and activates the mediator controller 111 (step S502). When the mediator controller 111 is activated, as is described previously in connection with Fig. 13, intermediary control can be performed to procure idle bandwidth for the communication carrier (steps S401 to S416 in Fig. 13). However, if the next lessor carrier does not exist in step 408 of Fig. 13 (step S408, N), the mediator controller 111 exits the process after sending the lease agreement to the accounting controller 110 (step S415) or informing the local server of the lessor communication carrier that the agreement has been cancelled (step S416).

As set forth hereinabove, the administrator apparatus 11 mediates between communication carriers that borrow and lend idle bandwidth, thereby achieving the efficient use of network resources. In addition, the administrator apparatus 11 can receive the commission or intermediary charge.

Incidentally, in Figs. 2 and 12, the administrator apparatus 11 has a block configuration as hardware. However, the same functions may be implemented by a program executed on a program control processor for performing the operation flows shown in Figs. 6, 7 and 11, 13 or 14.

### BRIEF DESCRIPTION OF THE DRAWINGS

Fig. 1 (A) is a schematic diagram showing the basic use form of a wireless line sharing network of the present invention; Fig. 1 (B) is a schematic diagram showing the use form of a conventional line occupied type network.
Fig. 2 is a block diagram showing the configuration of a wireless line sharing network system according to the first embodiment of the present invention.
Fig. 3 (A) is a diagram showing an example of the contents of a communication carrier management table 104 in the best-effort system; Fig. 3 (B) is a diagram showing an example of the contents of the communication carrier management table 104 in the bandwidth guarantee system; Fig. 3 (C) is a diagram showing an example of the contents of the communication carrier management table 104 in the "bandwidth guarantee + best-effort" system.
Fig. 4 (A) is a diagram showing an example of the contents of a carrier use condition memory; Fig. 4 (B) is a diagram showing an example of the contents of a user use condition memory.
Fig. 5 is a diagram showing an example of the contents of a service/ support bandwidth table 106.
Fig. 6 is a flowchart showing the operation of an administrator apparatus when having received a call connection request from a user terminal UE.
Fig. 7 is a flowchart showing the operation of the administrator apparatus when having received an acknowledgement of the call connection request from a communication carrier network.
Fig. 8 is a schematic diagram for explaining the operation of a bandwidth determination section for determining bandwidth.
Fig. 9 is a diagram showing an example of the contents of a rate change control memory.
Fig. 10 is a diagram showing an example of the contents of a rate change threshold table.
Fig. 11 is a flowchart showing the operation of a rate change controller for rate down control.
Fig. 12 is a block diagram showing the configuration of a wireless line sharing network system according to the second embodiment of the present invention.
Fig. 13 is a flowchart showing the intermediary operation of a mediator controller in the second embodiment.
Fig. 14 is a flowchart showing another example of the intermediary operation of the mediator controller in the second embodiment.

### DESCRIPTION OF CODES

1 Wireless line sharing network (RAN)
10 Base station control station
11 Administrator apparatus
101 Call acceptance controller
102 Access line controller
103 Rate change controller
104 Communication carrier management table
105 Use condition memory
106 Service/ support bandwidth table
107 Bandwidth determination section
108 Rate change control memory
109 Rate change threshold table
110 Accounting controller
111 Mediator controller
BS1 to BSn Wireless base station

## Claims

1. A wireless line sharing network system in a mobile communication network system capable of a plurality of communications at licensed radio frequencies, comprising:
a plurality of user terminals that subscribe to a plurality of communication carriers, respectively;
a plurality of wireless base stations capable of communicating with the respective user terminals at the radio frequencies;
a control station for controlling the wireless base stations and connecting each of the user terminals to a corresponding communication carrier network; and
a call acceptance controller for, when there is a request for call connection to a user terminal, accepting the call as well as reserving bandwidth in response to the call connection request based on at least carrier band information indicating radio bandwidth allocation patterns defined by the respective communication carriers on a contract and carrier use condition information indicating the current use conditions of the bandwidth of the respective communication carriers, and updating the carrier use condition information.

2. The wireless line sharing network system as claimed in claim 1, wherein the call acceptance controller updates the bandwidth reserved by using licensed band information of a communication carrier network corresponding to the user terminal concerning the call connection request.

3. The wireless line sharing network system as claimed in claim 1, further comprising a bandwidth determination means for determining bandwidth for the call connection request based on bandwidth commonly indicated in user support band information of the user terminal contained in the call connection request, licensed band information of a corresponding communication carrier network concerning the call connection request and carrier support band information on predetermined bands supported by the respective communication carriers with respect to each service.

4. The wireless line sharing network system as claimed in claim 3, wherein the bandwidth determination means includes:
a bandwidth list generation means for generating a list of at least one selectable bandwidth based on the user support band information, the licensed band information and the carrier support band information; and
a determination means for selecting bandwidth from the bandwidth list in descending order, and determining the selected bandwidth as bandwidth for the call connection request when the selected bandwidth is not greater than idle bandwidth obtained from the carrier use condition information.

5. The wireless line sharing network system as claimed in claim 1, further comprising a bandwidth change means for sequentially changing bandwidths allocated to call connected user terminals so that the used bandwidth of each of the communication carriers is in a predetermined range based on at least the carrier band information, the carrier use condition information and user use condition information indicating the current use conditions of the call connected ones of the user terminals.

6. The wireless line sharing network system as claimed in claim 4, further comprising a bandwidth change means for sequentially selecting call connected user terminals in descending order of bandwidths allocated to the user terminals based on user use condition information, and changing the bandwidth allocated to the call connected user terminal so that the used bandwidth of each of the communication carriers is in a predetermined range according to the bandwidth list corresponding to the selected user terminal.

7. The network system as claimed in claim 1, further comprising a mediator controller for, in the case where bandwidth cannot be reserved for the call connection request, mediating between a communication carrier with insufficient bandwidth and a communication carrier with excess bandwidth based on the carrier band information and the carrier use condition information so that the communication carrier with excess bandwidth leases idle bandwidth to the communication carrier with insufficient bandwidth.

8. The network system as claimed in claim 1, further comprising a mediator controller for, in the case where the use of radio bandwidth exceeds the predetermined percentage of the radio bandwidth defined by contract in a communication carrier, mediating between the communication carrier with insufficient bandwidth and a communication carrier with excess bandwidth so that the communication carrier with excess bandwidth leases idle bandwidth to the communication carrier with insufficient bandwidth.

9. The network system as claimed in claim 1, further comprising an accounting controller for charging each of the communication carriers based on the lease agreement concluded with the carrier.

10. An administrative apparatus for sharing a mobile communication network capable of a plurality of communications at licensed radio frequencies among a plurality of communication carriers, the apparatus comprising:
a first table for searchably storing carrier band information indicating radio bandwidth allocation patterns defined by the respective communication carriers on a contract;
a carrier use condition memory for searchably storing carrier use condition information indicating the current use conditions of the bandwidth of the respective communication carriers;
a user use condition memory for searchably storing user use condition information indicating the current use conditions of call connected ones of a plurality of user terminals that subscribe to the communication carriers, respectively; and
a controller for controlling the used bandwidth of each of the communication carriers in units of at least bandwidth used by each user terminal based on the carrier band information, the carrier use condition information and the user use condition information, and updating the carrier use condition information and the user use condition information.

11. The administrative apparatus as claimed in claim 10, wherein the controller includes:
a call acceptance controller for, when there is a request for call connection to a user terminal, accepting the call as well as reserving bandwidth in response to the call connection request based on at least the carrier band information indicating radio bandwidth allocation patterns defined by the respective communication carriers on a contract and the carrier use condition information indicating the current use conditions of the bandwidth of the respective communication carriers; and
a bandwidth determination means for determining bandwidth for the call connection request based on bandwidth commonly indicated in user support band information of the user terminal contained in the call connection request, licensed band information of a corresponding communication carrier network concerning the call connection request and carrier support band information on predetermined bands supported by the respective communication carriers with respect to each service.

12. The administrative apparatus as claimed in claim 11, wherein the bandwidth determination means includes:
a bandwidth list generation means for generating a list of at least one selectable bandwidth based on the user support band information, the licensed band information and the carrier support band information; and
a determination means for selecting bandwidth from the bandwidth list in descending order, and determining the selected bandwidth as bandwidth for the call connection request when the selected bandwidth is not greater than idle bandwidth obtained from the carrier use condition information.

13. The administrative apparatus as claimed in claim 10, wherein the controller further includes a bandwidth change means for sequentially changing bandwidths allocated to call connected user terminals so that the used bandwidth of each of the communication carriers is in a predetermined range based on at least the carrier band information, the carrier use condition information and user use condition information indicating the current use conditions of the call connected ones of the user terminals.

14. The administrative apparatus as claimed in claim 11, wherein the controller further includes a bandwidth change means for sequentially selecting call connected user terminals in descending order of bandwidths allocated to the user terminals based on user use condition information, and changing the bandwidth allocated to the call connected user terminal so that the used bandwidth of each of the communication carriers is in a predetermined range according to the bandwidth list corresponding to the selected user terminal.

15. The administrative apparatus as claimed in claim 10, wherein the controller further includes a mediator controller for, in the case where bandwidth cannot be reserved for the call connection request, mediating between a communication carrier with insufficient bandwidth and a communication carrier with excess bandwidth based on the carrier band information and the carrier use condition information so that the communication carrier with excess bandwidth leases idle bandwidth to the communication carrier with insufficient bandwidth.

16. The administrative apparatus as claimed in claim 10, wherein the controller further includes a mediator controller for, in the case where the use of radio bandwidth exceeds the predetermined percentage of the radio bandwidth defined by contract in a communication carrier, mediating between the communication carrier with insufficient bandwidth and a communication carrier with excess bandwidth so that the communication carrier with excess bandwidth leases idle bandwidth to the communication carrier with insufficient bandwidth.

17. The administrative apparatus as claimed in claim 10, wherein the controller further includes an accounting controller for charging each of the communication carriers based on the lease agreement concluded with the carrier.

18. An administrative method for sharing a mobile communication network capable of a plurality of communications at licensed radio frequencies among a plurality of communication carriers, the method comprising the steps of:
searchably storing carrier band information indicating radio bandwidth allocation patterns defined by the respective communication carriers on a contract;
searchably storing carrier use condition information indicating the current use conditions of the bandwidth of the respective communication carriers;
searchably storing user use condition information indicating the current use conditions of call connected ones of a plurality of user terminals that subscribe to the communication carriers, respectively;
determining, when a user terminal requests call connection, whether or not there is idle bandwidth available for accommodating the call connection request based on the carrier band information and carrier use condition information;
forwarding, when there is idle bandwidth available for accommodating the call connection request, the call connection request to a communication carrier network corresponding to the user terminal;
determining bandwidth for the call connection request based on a response to the call connection request from the communication carrier network; and
updating the carrier use condition information and the user use condition information according to the determined bandwidth.

19. The administrative method as claimed in claim 18, further comprising the step of searchably storing carrier support band information on predetermined bands supported by the respective communication carriers with respect to each service, wherein bandwidth for the call connection request is determined based on bandwidth commonly indicated in user support band information of the user terminal contained in the call connection request, licensed band information contained in the response to the call connection request from the communication carrier network and the carrier support band information.

20. The administrative method as claimed in claim 19, further comprising, in the step of determining bandwidth for the call connection request, the steps of:
generating a list of at least one selectable bandwidth based on the user support band information, the licensed band information and the carrier support band information;
selecting bandwidth from the bandwidth list in descending order; and
determining the selected bandwidth as bandwidth for the call connection request when the selected bandwidth is not greater than idle bandwidth obtained from the carrier use condition information.

21. The administrative method as claimed in claim 18, further comprising the step of sequentially changing bandwidths allocated to call connected user terminals so that the used bandwidth of each of the communication carriers is in a predetermined range based on at least the carrier band information, the carrier use condition information and the user use condition information.

22. The administrative method as claimed in claim 20, further comprising the steps of sequentially selecting call connected user terminals in descending order of bandwidths allocated to the user terminals based on user use condition information; and
changing the bandwidth allocated to the call connected user terminal so that the used bandwidth of each of the communication carriers is in a predetermined range according to the bandwidth list corresponding to the selected user terminal.

23. The administrative method as claimed in claim 18, further comprising the step of, in the case where bandwidth cannot be reserved for the call connection request, mediating between a communication carrier with insufficient bandwidth and a communication carrier with excess bandwidth based on the carrier band information and the carrier use condition information so that the communication carrier with excess bandwidth leases idle bandwidth to the communication carrier with insufficient bandwidth.

24. The administrative method as claimed in claim 18, further comprising the step of, in the case where the use of radio bandwidth exceeds the predetermined percentage of the radio bandwidth defined by contract in a communication carrier, mediating between the communication carrier with insufficient bandwidth and a communication carrier with excess bandwidth so that the communication carrier with excess bandwidth leases idle bandwidth to the communication carrier with insufficient bandwidth.

25. The administrative method as claimed in claim 18, further comprising the step of charging each of the communication carriers based on the lease agreement concluded with the carrier.

26. A computer program for sharing a mobile communication network capable of a plurality of communications at licensed radio frequencies among a plurality of communication carriers, the computer program causing a computer to perform the steps of:
searchably storing carrier band information indicating radio bandwidth allocation patterns defined by the respective communication carriers on a contract;
searchably storing carrier use condition information indicating the current use conditions of the bandwidth of the respective communication carriers;
searchably storing user use condition information indicating the current use conditions of call connected ones of a plurality of user terminals that subscribe to the communication carriers, respectively;
determining, when a user terminal requests call connection, whether or not there is idle bandwidth available for accommodating the call connection request based on the carrier band information and carrier use condition information;
forwarding, when there is idle bandwidth available for accommodating the call connection request, the call connection request to a communication carrier network corresponding to the user terminal;
determining bandwidth for the call connection request based on a response to the call connection request from the communication carrier network; and
updating the carrier use condition information and the user use condition information according to the determined bandwidth.
